# EUROPEAN PATENT APPLICATION

(11) **EP 3 352 089 A1**
(43) Date of publication of application: **25.07.2018**
(21) Application number: 16845955.0
(22) Date of filing: 14.09.2016
(51) Int. Cl.: G06F 13/00, G06Q 30/02, G06Q 30/06

(54) **INFORMATION PROCESSING DEVICE, INFORMATION PROCESSING METHOD, PROGRAM AND INFORMATION PROCESSING SYSTEM**

(30) Priority: 14.09.2015 JP 2015180977
(71) Applicant: IINE Card Japan Inc., Tokyo 105-0003 (JP)
(72) Inventor: SLUSARCZYK, Jakub, Tokyo 105-0003 (JP); WOSZIDLO, Rouven, Tokyo 105-0003 (JP); SMILOWICZ, Tomasz, Tokyo 105-0003 (JP)
(74) Representative: Murgitroyd & Company
(86) International application number: PCT/JP2016/004198
(87) International publication number: WO 2017/047081

(57) **Abstract**

An information processing apparatus (300) includes a storage (310), configured to store page images printed on pages of a publication and product information that is related to products included in the page images and is associated with the page images, and a controller (310), configured to determine a page image corresponding to a captured image of a publication captured by an imaging unit (360) by comparing the captured image with the page images and to display product information associated with the determined page image on a display (340).

## Description

### CROSS-REFERENCE TO RELATED APPLICATION

The present application claims priority to and the benefit of Japanese Patent Application No. 2015-180977 filed September 14, 2015, the entire contents of which are incorporated herein by reference.

### TECHNICAL FIELD

The present disclosure relates to an information processing apparatus, an information processing method, a program, and an information processing system.

### BACKGROUND

In recent years, a variety of methods have been proposed for sellers of products to offer their products to consumers, and consumers can now also purchase products by a variety of methods. For example, according to the subject matter disclosed in patent literature (PTL) 1, a seller can use a terminal to purchase a product online without actually going to a store where products are sold.

### CITATION LIST

### Patent Literature

PTL 1: JP 2006-155052 A

### SUMMARY

### (Technical Problem)

As means for providing and purchasing products thus become more diversified, consumers are able to obtain information on products from various sources and purchase products by various means. When, for example, a consumer obtains information on a certain product from a publication, such as a magazine, the information in the publication might not easily allow the consumer to determine a store at which the product can be purchased or inform the consumer of an online site that sells the product. Moreover, the consumer may not be able to obtain any information on a product whatsoever if, for example, a publication runs a photograph or the like of the product but lists no information on the product. In particular for such products listed in publications, it would be more convenient if the consumer could obtain information on the products or easily learn how to purchase them.

The present disclosure has been conceived in light of the above-described problem and aims to provide an information processing apparatus, an information processing method, a program, and an information processing system that can improve convenience.

### (Solution to Problem)

To resolve the above-described problem, an information processing apparatus according to an embodiment of the present disclosure comprises:
a storage configured to store page images printed on pages of a publication and product information that is related to products included in the page images and is associated with the page images; and
a controller configured to determine a page image corresponding to a captured image of a publication captured by an imaging unit by comparing the captured image with the page images and to display product information associated with the determined page image on a display.

In the information processing apparatus, in response to a user selecting a product from among products displayed as the product information, the controller may be configured to display detailed product information of the selected product on the display.

In the information processing apparatus, in response to a user selecting a product from among products displayed as the product information, the controller may be configured to store the selected product in a selection list in the storage, and in response to an operation by the user, the controller may be configured to display the product stored as the selection list on the display.

In the information processing apparatus, the controller may be configured to provide notification, from a notification interface, of proximity information indicating that the information processing apparatus is within a predetermined range from a store selling the product stored in the selection list.

In the information processing apparatus, the controller may be configured to judge, on the basis of a beacon signal acquired from a beacon installed in the store, whether the product stored in the selection list is sold by the store in which the beacon transmitting the beacon signal is installed and to provide the notification when judging that the product stored in the selection list is sold by the store.

An information processing method according to an embodiment of the present disclosure is an information processing method executed by an information processing apparatus, the information processing method comprising:
storing page images printed on pages of a publication and product information that is related to products included in the page images and is associated with the page images;
capturing an image of a publication with an imaging unit;
determining a page image corresponding to the captured image by comparing the captured image with the page images; and
displaying the product information associated with the determined page image on a display.

A program according to an embodiment of the present disclosure causes an information processing apparatus capable of communicating with a server to perform the steps of:
storing page images printed on pages of a publication and product information that is related to products included in the page images and is associated with the page images;
capturing an image of a publication with an imaging unit;
determining a page image corresponding to the captured image by comparing the captured image with the page images; and
displaying the product information associated with the determined page image on a display.

An information processing system according to an embodiment of the present disclosure comprises a server and a terminal connected communicably with each other,
the server comprising:
   a server storage configured to store page images printed on pages of a publication and product information that is related to products included in the page images and is associated with the page images; and
   a server communication interface configured to transmit the page images and the product information to the terminal;
the terminal comprising:
   a terminal communication interface configured to acquire the page images and the product information transmitted by the server;
   a terminal storage configured to store the acquired page images and the acquired product information;
   an imaging unit configured to capture an image of a publication;
   a terminal controller configured to determine a page image corresponding to the captured image by comparing the captured image with the page images stored in the terminal storage; and
   a display configured to display product information associated with the determined page image.

In the information processing system, the terminal communication interface may be configured to transmit, to the server, information related to determination processing executed by the terminal controller to determine the page image,
the server communication interface may be configured to acquire the information related to determination processing transmitted by the terminal, and
the server storage may be configured to store the acquired information related to determination processing.

In the information processing system, in response to a user selecting a product from among products displayed as the product information, the display may be configured to display detailed product information of the selected product,
the terminal communication interface may be configured to transmit, to the server, information related to display processing for displaying the detailed product information on the display,
the server communication interface may be configured to acquire the information related to display processing transmitted by the terminal, and
the server storage may be configured to store the acquired information related to display processing.

In the information processing system, in response to a user selecting a product from among products displayed as the product information, the terminal storage may be configured to store the selected product in a selection list,
the terminal communication interface may be configured to transmit, to the server, information related to storage processing to store the selected product in the storage,
the server communication interface may be configured to acquire the information related to storage processing transmitted by the terminal, and
the server storage may be configured to store the acquired information related to storage processing.

In the information processing system, the server may comprise a server controller configured to perform analysis on the basis of information stored by the server storage.

### (Advantageous Effect)

With the aforementioned configuration, an information processing apparatus, information processing method, program, and information processing system according to the present disclosure can improve convenience.

### BRIEF DESCRIPTION OF THE DRAWINGS

In the accompanying drawings:
FIG. 1 is a schematic configuration diagram of an information processing system according to an embodiment of the present disclosure;
FIG. 2 schematically illustrates an example user information table;
FIG. 3 schematically illustrates an example publication information table;
FIG. 4 schematically illustrates an example beacon ID table;
FIG. 5 illustrates an example product list screen displayed by a display of a terminal;
FIG. 6 illustrates an example detailed information screen displayed by the display of the terminal;
FIG. 7 illustrates an example selection list screen displayed by the display of the terminal;
FIG. 8 is a sequence diagram illustrating an example of information processing in the information processing system of FIG. 1; and
FIG. 9 is a flowchart illustrating an example of processing, by the terminal in FIG. 1, to notify the user.

### DETAILED DESCRIPTION

The following describes an embodiment of the present disclosure in detail with reference to the drawings.

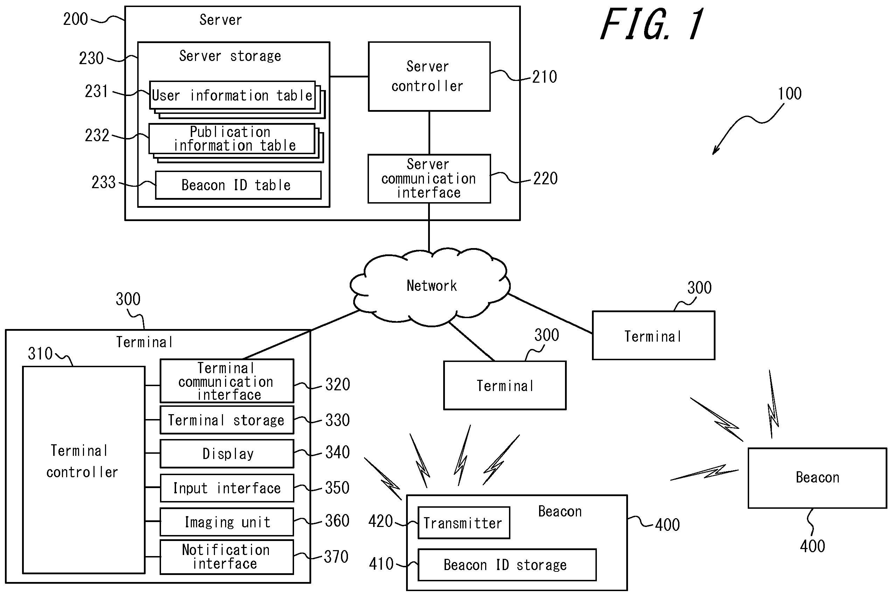

FIG. 1 is a schematic configuration diagram of an information processing system according to an embodiment of the present disclosure. An information processing system 100 includes a server 200, a plurality of terminals 300, and a beacon 400. The server 200 and each terminal 300 are connected to allow communication therebetween over a network 110, such as an Internet connection, a wide area network (WAN), or a local area network (LAN). The server 200 is an apparatus managed and used by a provider that provides information on predetermined products with the information processing system 100. The terminals 300 are apparatuses owned by respective users (consumers) that attempt to obtain information on predetermined products with the information processing system 100.

In the information processing system 100, users install a dedicated application for obtaining information on products with the information processing system 100 on their own terminals 300 in advance. The users perform user registration with the server 200 by inputting their own information through the terminal 300 and transmitting the information to the server. Next, the provider obtains information, from the publisher of a publication, on advertisements that run in the publication and registers the acquired information on advertisements with the server 200. The information on advertisements includes an image printed on each page (page image) on which an advertisement is run in the publication and information related to the products displayed on each page (product information). Product information is registered in association with each page image. The provider delivers the latest information of the dedicated application in conjunction with the day on which the publisher publishes the publication. The provider may, for example, deliver the latest information of the dedicated application on the same day as the day on which the publisher publishes the publication, a predetermined number of days before the publisher publishes the publication, or a predetermined number of days after the publisher publishes the publication. The latest information of the dedicated application includes page images and product information related to the publication newly published by the publisher. The latest information of the dedicated application further includes information (beacon ID information) indicating the correspondence between information related to a store selling a product and a beacon ID of the beacon 400 installed in the store. In other words, by delivery of the latest information, the dedicated application installed on each terminal 300 is updated to include page images, product information, and beacon ID information related to a newly published publication. The page images, product information, and beacon ID information related to the newly published publication are stored on the terminal 300.

The user views the publication published by the publisher. Among the products advertised in the publication, when the user finds a product that the user wishes to purchase, a product for which the user desires more detailed information, a product the user wishes to consider purchasing, or the like, the user uses an imaging unit provided in the terminal 300 to capture an image of the page of the publication displaying the product. The terminal 300 compares the captured image with stored page images and determines a page image corresponding to the captured image. The terminal 300 then displays products included in the determined page image, i.e. a general outline of product information (general product information) on the products associated with the determined page image, on the display of the terminal 300. The general product information is a portion of information within the product information. From the screen displaying the general product information on the display, the user can further view detailed information on a product (detailed product information), purchase a product, or register a product in a list to consider the product for purchase (selection list). The detailed product information contains either all of the product information or more of the product information than the general product information. The processing executed on the basis of user operation to display the general product information, to display the detailed product information, to purchase a product, to register a product in the selection list, and the like is transmitted to the server 200 from the terminal 300, and a history of operations executed by the user is recorded on the server 200.

The beacon 400 is installed in each store that sells a product displayed in the publication. The terminal 300 receives a beacon signal transmitted by the beacon 400 installed in a store and issues a notification from a notification interface when the received beacon signal was transmitted by a beacon installed in a store that sells a product registered in the selection list. The terminal 300 makes the judgment of whether the beacon signal was transmitted by a beacon installed in a store that sells a product registered in the selection list by referring to the selection list and the beacon ID information.

The information processing system 100 is described in detail below. In the present embodiment, an example of the publication being a fashion magazine is described below. Advertisements in the fashion magazine display products such as clothing, accessories, and footwear. Advertisements may, for example, display products being worn on a model or may display products individually. Photographs of the model wearing a product and of the actual product worn by the model may be displayed in a predetermined layout.

The server 200 is an information processing apparatus that is, for example, configured by a personal computer. The server 200 includes a server controller 210, a server communication interface 220, and a server storage 230. The server communication interface 220 and the server storage 230 are connected to the server controller 210.

The server controller 210 is a processor that controls and manages the server 200 overall, starting with the functional blocks of the server 200. The server controller 210 is configured by a processor such as a central processing unit (CPU) that executes a program prescribing control procedures. Such a program is, for example, stored in the server storage 230, on an external storage medium, or the like.

The server communication interface 220 exchanges data with each terminal 300 by connecting to the network 110. For example, on the basis of a request acquired from a terminal 300, the server communication interface 220 transmits a program for executing the dedicated application to the terminal 300. At a predetermined time designated by the provider (i.e. at the time of transmitting the latest information of the dedicated application), the server communication interface 220 transmits the page images, product information, and beacon ID information stored in the server storage 230 to the terminals 300. The server communication interface 220 also receives information, from the terminals 300, related to processing executed by the terminals 300 on the basis of user operation.

The server storage 230 includes a variety of memory devices and stores various information depending on the intended use, such as data necessary for operation of the server controller 210. The server storage 230 also includes a device such as random access memory (RAM) that functions as a working memory. In the present embodiment, the server storage 230 includes a user information table 231, a publication information table 232, and a beacon ID table 233.

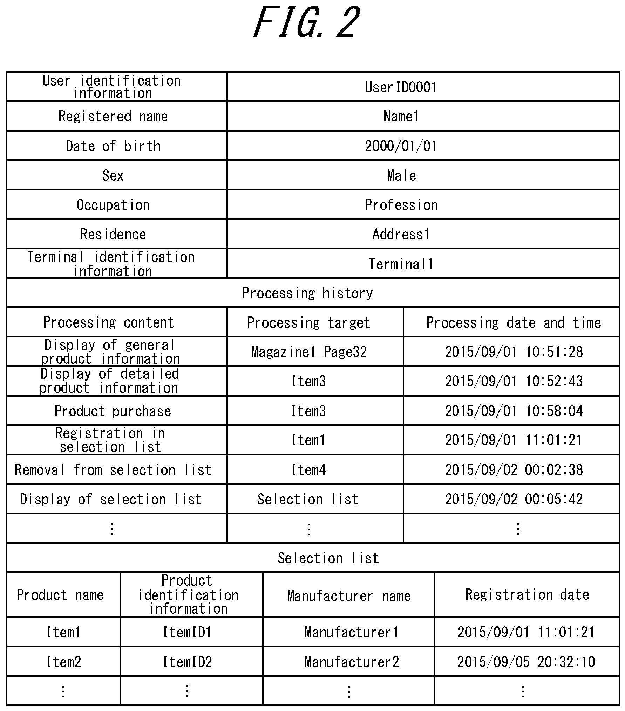

The user information table 231 stores information related to a user. FIG. 2 schematically illustrates an example of the user information table 231. The server storage 230 stores user information on each registered user as a user information table 231. The user information table 231 is created when the user registers and is updated by the server 200 each time the terminal 300 executes predetermined processing on the basis of user operation.

User identification information, registered name, date of birth, sex, occupation, residence, terminal identification information, the processing history, the selection list, and the like are stored in the user information table 231 as information related to a user. The user identification information is information uniquely associated with a user that uses the information processing system 100 and is, for example, represented by a combination of alphanumeric characters. The registered name is, for example, a name that identifies the user and is input by the user by operation of the terminal 300. The date of birth, occupation, and residence are, for example, the date of birth, occupation, and residence of the user that are input by the user by operation of the terminal 300. The date of birth, occupation, and residence may be input by any method, such as being selected by the user from among a plurality of choices displayed in a pulldown menu or being freely input by the user. The residence may, for example, be input as an address or be input section by section, such as by prefecture, by city, and so forth. The terminal identification information is information uniquely associated with each terminal 300 and is, for example, represented by a combination of alphanumeric characters. The terminal identification information is information for identifying the terminal 300 owned by the user who is indicated in the user information table 231.

The processing history is a history of processing executed on the terminal 300 by the user of the user information table 231 providing operation input to the terminal 300. Such processing includes processing to display the general product information, to display detailed product information, to purchase a product, to register a product in the selection list, to remove a product from the selection list, and to display the selection list. The processing history includes processing for removal from the selection list, which is the opposite processing from registration in the selection list. As the processing history, the user information table 231 stores the processing content, the processing target, and the processing date and time for each instance of processing. As the processing target, information identifying the publication and the page number is stored when the processing content is to display the general product information, and information identifying a product (product identification information) is stored when the processing content is to display the detailed product information, to purchase a product, to register a product in the selection list, or to remove a product from the selection list. Details on each type of processing are provided below.

The selection list is a list of products registered therein by the user providing operation input to the terminal 300. As the selection list, the user information table 231 stores the product name, product identification information, manufacturer name, and registration date for each registered product. The product name is the name of the registered product. The product identification information is information uniquely associated with a product and is, for example, represented by a combination of alphanumeric characters. The manufacturer name is the name of the manufacturer of the product. The registration date is the date and time at which the product was registered in the selection list and corresponds to the date and time at which the terminal 300 executed the registration processing.

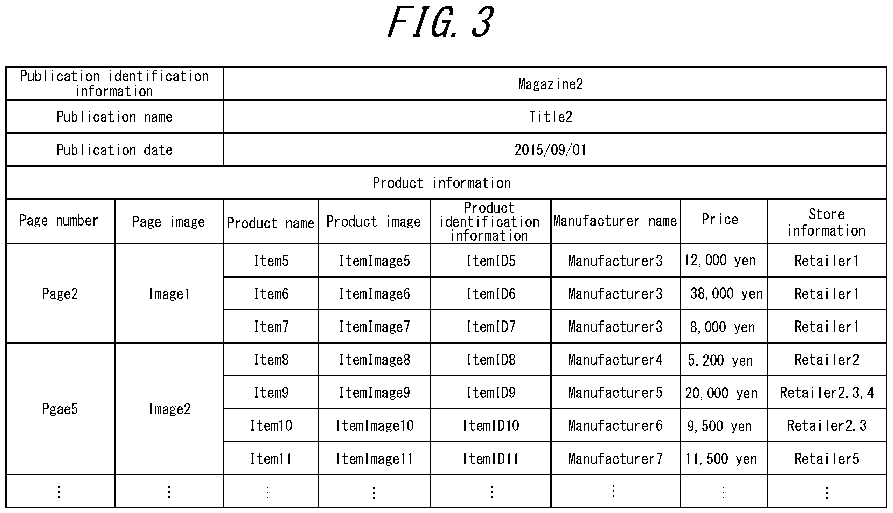

The publication information table 232 stores information related to a publication. FIG. 3 schematically illustrates an example of the publication information table 232. For each published publication (magazine in the present embodiment), the server storage 230 stores information on products displayed in the publication as the publication information table 232. The publication information table 232 is registered in the server storage 230 on the basis of information that a manager acquires from the publisher.

Publication identification information, publication name, publication date, and product information for a publication displaying products are stored in the publication information table 232 as information related to the publication. The publication identification information is information uniquely associated with a publication and is, for example, represented by a combination of alphanumeric characters. The publication name is the name of the publication. For example, in the case of the publication being a magazine, the publication name is the title of the magazine or the like. The publication date is the date on which the publication was published.

The product information stored in the publication information table 232 is information on the products included in advertisements running in the publication indicated by the publication information table 232. The publication information table 232 stores the page number, page image, product name, product image, product identification number, manufacturer name, price, store information, and the like as product information. The page number is the number of the page running the advertisement. The page image is the image printed on each page number. The product name, product identification number, and manufacturer name are as listed above in the description of the user information table 231. The product image is an image related to the product, such as a captured image of the product. The price is the price of the product, such as the manufacturer's suggested retail price. The store information is information on an actual store that sells the product. The store information may, for example, include information such as the name of a retail store, the location of a retail store, a map indicating the location of a retail store, and the like. As illustrated in FIG. 3, product information is classified by the page of the advertisement displaying the product and is stored in association with a page image.

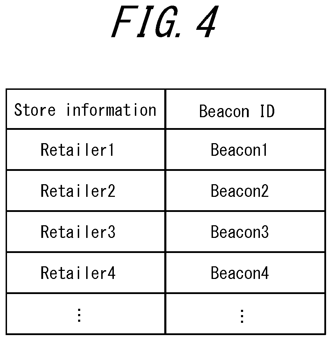

The beacon ID table 233 stores beacon ID information. The beacon ID is information uniquely associated with each beacon 400 and is, for example, represented by a combination of alphanumeric characters. For example as illustrated in FIG. 4, the beacon ID table 233 stores the store information of each store in association with the beacon ID of the beacon 400 installed in the store.

The terminal 300 is an information processing device configured, for example, as a dedicated terminal used in the information processing system 100, as a smartphone, as a tablet, or the like. The terminal 300 includes a terminal controller 310, a terminal communication interface 320, a terminal storage 330, a display 340, an input interface 350, an imaging unit 360, and a notification interface 370. The terminal communication interface 320, terminal storage 330, display 340, input interface 350, imaging unit 360, and notification interface 370 are connected to the terminal controller 310.

The terminal controller 310 is a processor that controls and manages the terminal 300 overall, starting with the functional blocks of the terminal 300. The terminal controller 310 is configured by a processor such as a CPU that executes a program prescribing control procedures. Such a program is, for example, stored in the terminal storage 330, on an external storage medium, or the like. Details of this processing executed by the terminal controller 310 on the basis of user operation are provided below.

The terminal communication interface 320 exchanges data with the server 200 by connecting to the network 110. For example, the terminal communication interface 320 receives a program, transmitted by the server 200, for executing a dedicated application. The terminal communication interface 320 also receives the page images, product information, and beacon ID information, which are the latest information of the dedicated application, transmitted by the server 200. The terminal communication interface 320 transmits information related to processing executed by the terminal 300 on the basis of user operation to the server 200.

The terminal communication interface 320 also receives a beacon signal transmitted by the beacon 400.

The terminal storage 330 includes a variety of memory devices and stores various information depending on the intended use, such as data necessary for operation of the terminal controller 310. The terminal storage 330 also includes a device such as RAM that functions as a working memory. In the present embodiment, the terminal storage 330 stores, for example, a program received by the terminal communication interface 320 and related to the dedicated application used in the information processing system 100. The terminal storage 330 also stores the page images, product information, and beacon ID information received by the terminal communication interface 320. The terminal storage 330 may also store the selection list.

The display 340 is a display device such as a liquid crystal display, an organic EL display, an inorganic EL display, or the like. The display 340 displays various information in accordance with the content of the processing executed by the terminal controller 310 on the basis of user operation.

The input interface 350 receives operation input from the user of the terminal 300. The input interface 350 is configured using operation buttons (operation keys), for example. When the terminal 300 includes a touch panel, the touch panel may function as the input interface 350 by receiving operation input through detection of contact by the user's finger, a stylus, or the like.

The imaging unit 360 is, for example, configured by a digital camera or the like. The imaging unit 360 captures an image of a page of a publication on the basis of user operation input.

The notification interface 370 notifies the user when the terminal 300 is located near a store selling a product registered in the selection list. Based on the notification from the notification interface 370, the user can recognize that a store selling a product that the user registered in the selection list is located near the user's current position. In the present embodiment, the judgment of whether the terminal 300 is located near a store selling a product registered in the selection list is made by determining whether the terminal 300 can acquire the beacon signal transmitted by the beacon 400. In other words, "near" in the present embodiment refers to a range in which the terminal 300 can receive the beacon signal from the beacon 400.

The notification interface 370 can provide notification for example by a visual method using an image, characters, light emission, or the like; an auditory method using audio or the like; or a combination of these methods. In the case of providing notification with a visual method, the notification interface 370 is, for example, a display device that provides notification by displaying images or characters. The notification interface 370 may, for example, provide notification by causing an LED or other such light emitting device to emit light. In the case of providing notification with an auditory method, the notification interface 370 is, for example, a speaker or other such sound generating device that provides notification by outputting an alarm, audio guidance, or the like. Notification by the notification interface 370 is not limited to a visual or auditory method. Any method recognizable by the user may be adopted.

The beacon 400 is installed in each store. The beacon 400 is an apparatus that periodically transmits a beacon signal to the surrounding area. The beacon 400 includes a beacon ID storage 410 and a transmitter 420. The beacon ID storage 410 stores a beacon ID associated with the beacon 400. The transmitter 420 overlays the beacon ID stored in the beacon ID storage 410 on a beacon signal and transmits the beacon signal.

Next, details of this processing executed by the terminal controller 310 on the basis of user operation input are provided, along with an example of an input operation by the user. Here, the user is assumed to have completed user registration in advance, and the latest page images, product information, and beacon ID information are assumed to be stored in the terminal storage 330 of the terminal 300.

The user views the published magazine. When finding a product that the user wishes to purchase, a product for which the user desires more detailed information, a product the user wishes to consider purchasing, or the like among the advertisements included in the magazine, the user activates the imaging unit 360 of the terminal 300. Using the imaging unit 360, the user then captures an image of the page displaying the product that the user wishes to purchase, the product for which the user desires more detailed information, the product the user wishes to consider purchasing, or the like. The image captured by the imaging unit 360 is stored in the terminal storage 330.

Next, the terminal controller 310 determines a page image, from among the page images stored in the terminal storage 330, corresponding to the captured image. Specifically, the terminal controller 310 determines the page image corresponding to the captured image by using a well-known image analysis technique to compare the captured image and the page images and calculate the degree of matching of the images.

The terminal controller 310 then displays, on the display 340, the general product information of the products corresponding to the determined page image, i.e. the general product information of the products on the page that the user imaged using the imaging unit 360. The screen displayed on the display 340 is also referred to as the "product list screen" in the present disclosure.

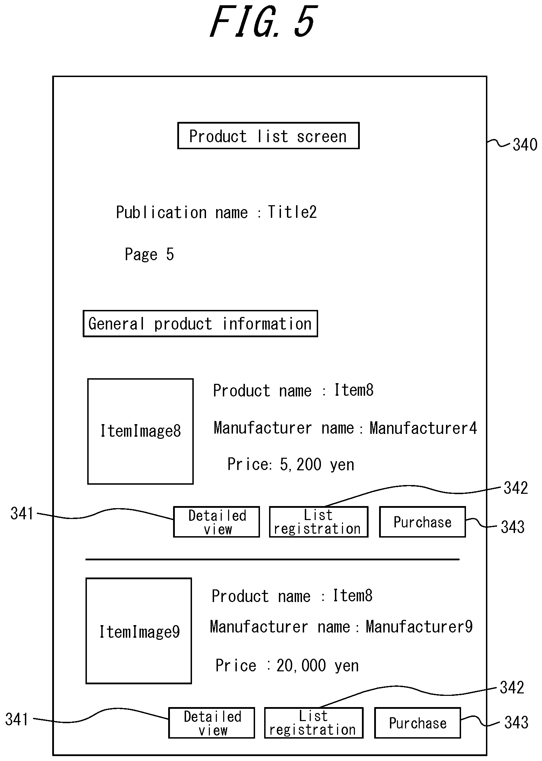

FIG. 5 illustrates an example product list screen displayed by the display 340. As illustrated in FIG. 5, the publication name of the publication that includes the page image determined by the terminal controller 310, the page number corresponding to the page image, and the general product information are displayed on the product list screen. In other words, the publication name and the page number displayed on the product list screen indicate the publication name and page number carrying the general product information displayed on the display 340. The product image, product name, name of the manufacturer of the product, and product price from among the product information are displayed on the product list screen as the general product information, for example as illustrated in FIG. 5. A detailed view button 341, a register in list button 342, and a purchase button 343 are displayed below the general product information of each product. When the user wishes to view general product information of a product that is not displayed in the first view of the display 340, the user can cause the general product information of the product to be displayed on the display 340 by, for example, performing an operation such as swiping or scrolling the display 340.

When the user wishes to view detailed information on any of the products displayed on the product list screen in FIG. 5, the user performs an operation, such as a tap or click, on the detailed view button 341 of the product for which the user wishes to view detailed information. On the basis of user operation input, such as a tap or click, the terminal controller 310 causes the detailed product information of the selected product to be displayed on the display 340. The screen displayed on the display 340 is also referred to as the "detailed information screen" in the present disclosure.

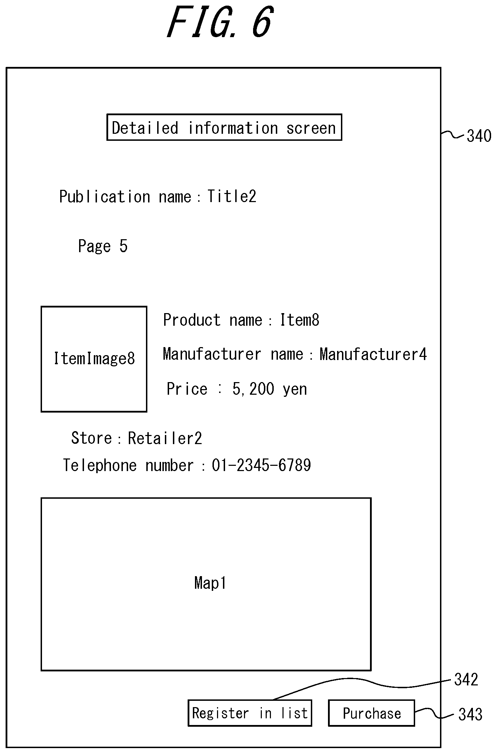

FIG. 6 illustrates an example detailed information screen displayed by the display 340. As illustrated in FIG. 6, the publication name of the publication carrying the products selected by the user, the page number corresponding to the page image, and the detailed product information are displayed on the detailed information screen. In the example in FIG. 6, the product image, product name, name of the manufacturer of the product, product price, and store information on a store selling the product are displayed as the detailed product information. The store information includes, for example, a store name, a store telephone number, and a map indicating the location of the store. The user can call the store phone number to ask questions and can refer to the map indicating the location of the store and actually go to see or purchase the product. The register in list button 342 and the purchase button 343 are also displayed in the detailed product information.

When the user wishes to register any of the products displayed on the product list screen in FIG. 5 or the product displayed on the detailed information screen in FIG. 6 in the selection list, the user performs an operation, such as a tap or click, on the register in list button 342 of the product to be registered in the selection list. On the basis of user operation input, such as a tap or click, the terminal controller 310 registers the selected product in the selection list and stores the selection list in the terminal storage 330. The terminal controller 310 also transmits information, from the terminal communication interface 320 to the server 200, indicating that registration of the product in the selection list was selected. Once the server 200 receives this information, the server controller 210 registers information on the registered product in the selection list of the user information table 231 that corresponds to the user who selected registration of the product in the selection list.

By performing a predetermined operation for viewing the selection list, the user can cause a list of products registered by the user in the selection list to be displayed on the display 340, thus allowing the user to view the products registered in the selection list. When displaying the selection list screen, the terminal controller 310 refers to information related to the products registered in the selection list from among the product information stored in the terminal storage 330 to generate the selection list screen and then causes the selection list screen to be displayed on the display 340. The screen displaying the list of products registered in the selection list is also referred to as the "selection list screen" in the present disclosure.

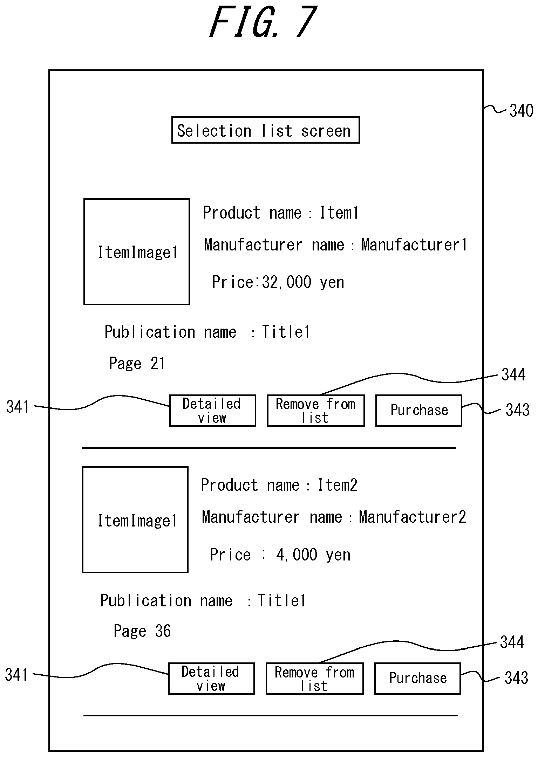

FIG. 7 illustrates an example selection list screen displayed by the display 340. As illustrated in FIG. 7, information on the products registered in the selection list is displayed on the selection list screen in list format. Here, the information related to products displayed on the display 340 is, for example, the same as the information displayed on the product list screen. In other words, the selection list screen includes the general product information, such as the product image, product name, manufacturer name, price, and the like, along with the name of the publication displaying the product and the page number. The detailed view button 341, the purchase button 343, and a remove from list button 344 are displayed below the information related to each product.

When the user selects the detailed view button 341 by an operation such as a tap or click, the detailed information screen in FIG. 6, for example, is displayed on the display 340, and the user can view the detailed product information.

When the user selects the remove from list button 344 by an operation, such as a tap or click, on the selection list screen, the terminal controller 310 removes the product for which the remove from list button 344 was selected from the selection list stored in the terminal storage 330. The terminal controller 310 also transmits information, from the terminal communication interface 320 to the server 200, indicating that removal of the product from the selection list was selected. Once the server 200 receives this information, the server controller 210 removes the information on the registered product from the selection list of the user information table 231 that corresponds to the user who selected removal of the product from the selection list.

When the user desires delivery of any of the products displayed on the product list screen in FIG. 5, the product displayed on the detailed information screen in FIG. 6, or any of the products displayed on the selection list screen in FIG. 7, the user performs an operation, such as a tap or click, on the purchase button 343 of the product the user wishes to purchase. On the basis of this operation, the terminal communication interface 320 accesses a website, over a network, where the product can be purchased online and causes the display 340 to display the screen of an online shopping site where the product can be purchased online. By performing a predetermined purchasing operation and procedure, the user can purchase the product from the screen of the online shopping site displayed on the display 340.

Each time the terminal controller 310 executes the above-described processing, the terminal controller 310 transmits information related to the executed processing from the terminal communication interface 320 to the server 200. Once the information related to processing executed by the terminal 300 is received on the server 200 from the server communication interface 220, the server controller 210 stores the information as processing history in the user information table 231 of the user associated with the terminal 300.

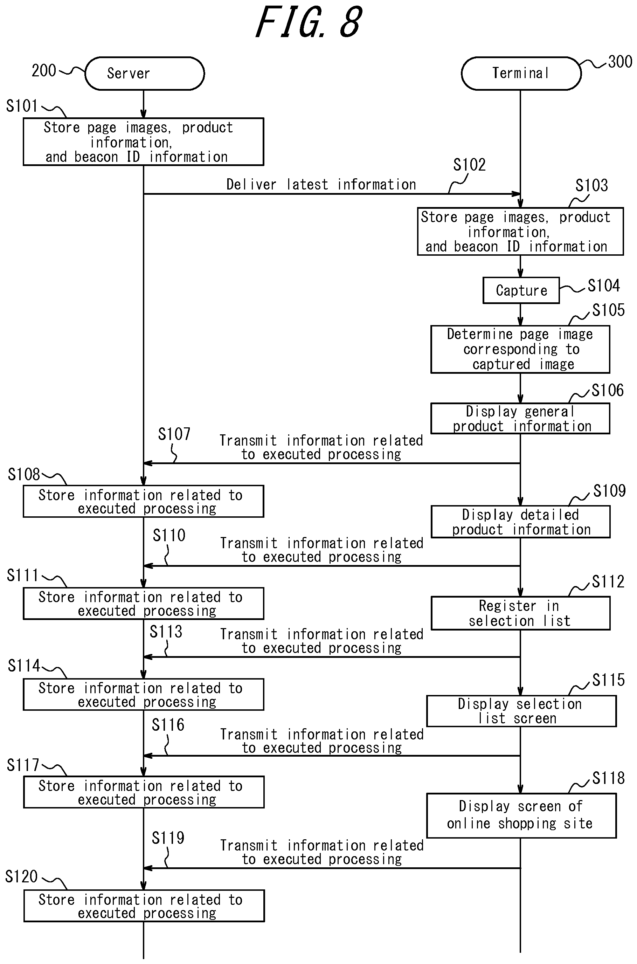

Here, an example of the information processing executed by the information processing system 100 is described with reference to FIG. 8.

On the basis of information, acquired from the publisher, related to advertisements running in the publication, the manager first registers page images and product information in the server 200 to store the page images and project information in the server storage 230 (step S101). In step S101, the manager also stores beacon ID information as necessary in the server storage 230, depending on circumstances such as the existence of a store in which a beacon has been newly installed.

At a predetermined time established by the manager, the server 200 delivers the latest information on page images, product information, and beacon ID information stored in the server storage 230 to the terminal 300 from the server communication interface 220 (step S102).

On the terminal 300, once the terminal controller 310 receives the latest information delivered from the server 200 in step S102, the terminal controller 310 stores the received page images, product information, and beacon ID information in the terminal storage 330 (step S103).

Next, the user uses the imaging unit 360 of the terminal 300 to image an advertisement running on a predetermined page of the publication (step S104).

Using an image analysis technique, the terminal controller 310 compares the image captured by the imaging unit 360 in step S104 and the page image stored in the terminal storage 330 to determine a page image corresponding to the captured image (step S105).

The terminal controller 310 then displays the general product information related to products included on the page of the page image determined in step S105 on the display 340 (step S106).

The terminal controller 310 transmits information related to the processing executed in step S106 from the terminal communication interface 320 to the server 200 (step S107).

Once the server 200 receives the information, related to processing, that was transmitted from the terminal 300 in step S107, the server controller 210 stores the received information related to processing in the server storage 230 (step S108).

Next, when the user performs an operation to select the detailed view button 341, then in response to operation input provided by the user to the input interface 350, the terminal controller 310 displays the detailed product information of the selected product on the display 340 (step S109).

The terminal controller 310 transmits information related to the processing executed in step S109 from the terminal communication interface 320 to the server 200 (step S110).

Once the server 200 receives the information, related to processing, that was transmitted from the terminal 300 in step S110, the server controller 210 stores the received information related to processing in the server storage 230 (step Sill).

Next, when the user performs an operation to select the register in list button 342, then in response to operation input provided by the user to the input interface 350, the terminal controller 310 executes processing to register the selected product in the selection list and store the selection list in the terminal storage 330 (step S112).

The terminal controller 310 transmits information related to the processing executed in step S112 from the terminal communication interface 320 to the server 200 (step S113).

Once the server 200 receives the information, related to processing, that was transmitted from the terminal 300 in step S113, the server controller 210 stores the received information related to processing in the server storage 230 (step S114).

Next, when the user performs an operation to display the selection list on the display 340, then in response to operation input provided by the user to the input interface 350, the terminal controller 310 executes processing to cause the selection list to be displayed on the display 340 (step S115).

The terminal controller 310 transmits information related to the processing executed in step S115 from the terminal communication interface 320 to the server 200 (step S116).

Once the server 200 receives the information, related to processing, that was transmitted from the terminal 300 in step S116, the server controller 210 stores the received information related to processing in the server storage 230 (step S117).

Next, when the user performs an operation to select the purchase button 343, then in response to operation input provided by the user to the input interface 350, the terminal controller 310 executes processing to cause the screen of an online shopping site to be displayed on the display 340 (step S118). By providing predetermined input for purchasing a product, the user can purchase the product from the screen of the online shopping site displayed on the display 340.

The terminal controller 310 transmits information related to the processing executed in step S118 from the terminal communication interface 320 to the server 200 (step S119). When the terminal controller 310 executes predetermined processing for purchasing a product in response to operation input provided by the user for purchasing the product, the terminal controller 310 may also transmit information on this processing to the server 200.

Once the server 200 receives the information, related to processing, that was transmitted from the terminal 300 in step S119, the server controller 210 stores the received information related to processing in the server storage 230 (step S120).

Next, details on the notification by the notification interface 370 are described. For the notification interface 370 to issue a notification, it is assumed that the user has registered a product in the selection list. The beacon 400 is installed in each store and periodically transmits a beacon signal. On the terminal 300, once the terminal communication interface 320 receives the beacon signal, the terminal controller 310 identifies the beacon ID included in the beacon signal.

After identifying the beacon ID, the terminal controller 310 identifies the store information corresponding to the beacon ID on the basis of the beacon ID information stored by the terminal storage 330. Next, by referring to the product information stored in the terminal storage 330, the terminal controller 310 judges whether the product corresponding to the identified store information, i.e. the product sold by the identified store, is included among the products registered in the selection list. The terminal controller 310 issues a notification from the notification interface 370 when judging that the product corresponding to the identified store information is included among the products registered in the selection list.

On the basis of the notification, the user can learn that a store selling a product registered by the user in the selection list is near the user's current position (at least within the distance at which the terminal 300 can receive the beacon signal). When the user wishes to purchase the registered product, the user can then head towards the store. At this time, the terminal 300 may display the identified store information on the display 340, such as a map indicating the location of the store. In this way, the user can immediately learn the position of the store. The terminal 300 may display, on the display 340, products that are sold by the identified store and are registered in the registration list. In this way, the user can immediately learn which of the products registered in the registration list are sold by nearby stores.

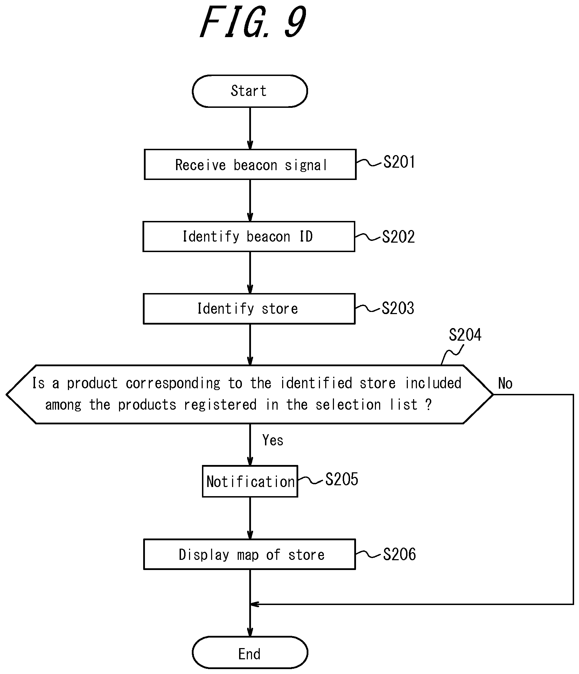

Next, an example of processing executed by the terminal 300 to notify the user is described with reference to the flowchart in FIG. 9.

First, using the terminal communication interface 320, the terminal 300 receives a beacon signal transmitted by the beacon 400 (step S201).

Next, on the terminal 300, the terminal controller 310 identifies the beacon ID included in the beacon signal received in step S201 (step S202).

The terminal controller 310 then refers to the beacon ID information stored in the terminal storage 330 to determine a store corresponding to the beacon ID identified in step S202 (step S203).

Next, the terminal controller 310 refers to the product information stored in the terminal storage 330 to judge whether a product corresponding to the store identified in step S203 is included among the products registered in the selection list (step S204).

When the terminal controller 310 judges that the product corresponding to the store identified in step S203 is not included among the products registered in the selection list (step S204: No), the terminal controller 310 terminates this processing.

Conversely, when the terminal controller 310 judges that the product corresponding to the store identified in step S203 is included among the products registered in the selection list (step S204: Yes), the terminal controller 310 issues a notification from the notification interface 370 (step S205).

The terminal controller 310 displays a map of the store identified in step S203 on the display 340 (step S206). The display in step S206 is not limited to a map. Other information related to the determined store may be displayed, as may information related to the product that is sold by the determined store and is registered in the registration list.

As described above, according to the information processing system 100 of the present embodiment, the terminal controller 310 determines a page number of a publication, of which an image is captured by the imaging unit 360, on the basis of the captured image and displays the general product information of a product appearing on the page on the display 340. Therefore, the user can easily view information on a product for which the user wishes to obtain information by capturing an image of the page displaying the product. The information processing system 100 thus improves convenience. Furthermore, information on products associated with a captured page is provided on the display. Hence, even if the manufacturers of the products on the imaged page differ, for example, information on all of the products is displayed on the display 340. Since products by various manufacturers are thus displayed for the user without being classified by manufacturer, products by manufacturers that the user was unaware of or not interested in are also presented to the user. This provides manufacturers with an opportunity to be recognized by the user. In other words, manufacturers have more opportunities for their products to be recognized.

According to the information processing system 100, the user can also view detailed information of a specific product by performing an operation to select the detailed view button 341. Hence, the user can easily view detailed information on products displayed in the publication. The information processing system 100 thus improves convenience.

According to the information processing system 100, the user can register a predetermined product in the selection list. The user can easily confirm the products registered in the selection list by performing an operation to display the selection list on the display 340. Hence, by registering a product that the user wishes to purchase, a product for which the user desires more detailed information, a product the user wishes to consider purchasing, or the like in the selection list, the user can easily confirm these products even after time goes by. Furthermore, when the user is located within a predetermined range from a store selling a product thus registered in the selection list, a beacon signal is used to notify the user of the store. When the user approaches the predetermined range from a store selling a product registered in the selection list, the user can therefore confirm the notification and then visit the store to look at or purchase the product.

According to the information processing system 100, the user can easily cause an online shopping site for purchasing a product to be displayed from the product list screen, the detailed information screen, the selection list screen, and the like, allowing the user to purchase the product online easily.

Furthermore, according to the information processing system 100, information on the processing executed by the terminal controller 310 is transmitted to the server 200 and stored in the user information table 231 of the server storage 230. A history of operations that the user has input to the terminal 300 can be obtained by such accumulation of information on processing executed by the terminal controller 310. Hence, information on what type of product each user views or purchases, in which time slot, and how often, can be obtained by analyzing this history. The result of analyzing this information can be used for product development and marketing.

The present disclosure is based on the drawings and on embodiments, but it should be noted that a person of ordinary skill in the art could easily make a variety of modifications and adjustments based on the present disclosure. Therefore, such changes and modifications are to be understood as included within the scope of the present disclosure.

For example, the functions and the like included in the various components and steps may be reordered in any logically consistent way. Furthermore, components or steps may be combined into one or divided.

In the above embodiment, the publication has been described as being a magazine, but the publication is not limited to this example. The publication may be of a different type, such as a newspaper or a book. In the above embodiment, the provision of product information to the user by performing predetermined information processing for an advertisement page running in a magazine has been described, but the product information is not limited to being information on a product displayed on the advertisement page. The information processing system 100 may, for example, provide the user with product information for products on all pages of the magazine using the method described in the above embodiment. In this way, the user can obtain product information on all products listed in the magazine.

In the above embodiment, the predetermined range between the terminal 300 and the store in order for the notification interface 370 to provide notification has been described as being set to the range at which the terminal 300 can receive the beacon signal, but the method of setting the predetermined range is not limited to this example. For example, the terminal 300 may include a position information acquisition unit configured to acquire the position of the terminal 300. When the position of the terminal 300 acquired by the position information acquisition unit is within a predetermined distance (for example, 200 m or less) from a store, the terminal 300 may provide notification from the notification interface 370. The position information acquisition unit can, for example, acquire the position of the terminal 300 using a global positioning system (GPS) function.

In the above embodiment, the server controller 210 has been described as comparing page images and a captured image to determine the page, but the method for determining the page is not limited to this example. For example, a digital watermark may be embedded in each page of the publication, or a QR code® (QR code is a registered trademark in Japan, other countries, or both) or the like may be printed in advance on each page. The server controller 210 may then read the digital watermark or QR code of the imaged publication and compare the digital watermark or QR code with information stored in advance in the server storage 210 to determine the page.

When a portion of information on products listed in the publication is missing due to circumstances such as the publisher not possessing all of the information on the products, the manager may fill in the missing information by, for example, directly adding to the information stored in the publication information table 232. Having the manager thus fill in the missing information makes it easier to prevent gaps in the information provided to the user.

For example, when the publisher has a photograph of the product while being worn by a model but does not have data related to a photograph of the product alone, the manager can take a photograph of the product alone and store the photograph in the server 200 to fill in the missing information. In this case, the manager can, for example, set up a simple photography studio in the back of a truck (vehicle) and travel with the truck to the site where photographs are produced for the magazine pages, the office of the stylist in charge of providing the products necessary for producing predetermined photographs, or the store where products are sold. In the photography studio, the manager can then photograph products acquired at the stylist's office, the store, or the like to which the truck has traveled. Providing a photography studio in a truck in this way allows photographs to be taken easily by traveling to the photo production site, the office of the stylist in charge of products, a store selling products, or the like. Information related to pictures of products can thus be stored more smoothly in the publication information table 233.

### REFERENCE SIGNS LIST

- 100: Information processing system
- 110: Network
- 200: Server
- 210: Server controller
- 220: Server communication interface
- 230: Server storage
- 231: User information table
- 232: Publication information table
- 233: Beacon ID table
- 300: Terminal
- 310: Terminal controller
- 320: Terminal communication interface
- 330: Terminal storage
- 340: Display
- 341: Detailed view button
- 342: Register in list button
- 343: Purchase button
- 344: Remove from list button
- 350: Input interface
- 360: Imaging unit
- 370: Notification interface
- 400: Beacon
- 410: Beacon ID storage
- 420: Transmitter

## Claims

1. An information processing apparatus comprising:
a storage configured to store page images printed on pages of a publication and product information that is related to products included in the page images and is associated with the page images; and
a controller configured to determine a page image corresponding to a captured image of a publication captured by an imaging unit by comparing the captured image with the page images and to display product information associated with the determined page image on a display.

2. The information processing apparatus of claim 1, wherein in response to a user selecting a product from among products displayed as the product information, the controller is configured to display detailed product information of the selected product on the display.

3. The information processing apparatus of claim 1, wherein in response to a user selecting a product from among products displayed as the product information, the controller is configured to store the selected product in a selection list in the storage, and in response to an operation by the user, the controller is configured to display the product stored as the selection list on the display.

4. The information processing apparatus of claim 3, wherein the controller is configured to provide notification, from a notification interface, of proximity information indicating that the information processing apparatus is within a predetermined range from a store selling the product stored in the selection list.

5. The information processing apparatus of claim 4, wherein the controller is configured to judge, on the basis of a beacon signal acquired from a beacon installed in the store, whether the product stored in the selection list is sold by the store in which the beacon transmitting the beacon signal is installed and to provide the notification when judging that the product stored in the selection list is sold by the store.

6. An information processing method executed by an information processing apparatus, the information processing method comprising:
storing page images printed on pages of a publication and product information that is related to products included in the page images and is associated with the page images;
capturing an image of a publication with an imaging unit;
determining a page image corresponding to the captured image by comparing the captured image with the page images; and
displaying the product information associated with the determined page image on a display.

7. A program causing an information processing apparatus capable of communicating with a server to perform the steps of:
storing page images printed on pages of a publication and product information that is related to products included in the page images and is associated with the page images;
capturing an image of a publication with an imaging unit;
determining a page image corresponding to the captured image by comparing the captured image with the page images; and
displaying the product information associated with the determined page image on a display.

8. An information processing system comprising a server and a terminal connected communicably with each other,
the server comprising:
a server storage configured to store page images printed on pages of a publication and product information that is related to products included in the page images and is associated with the page images; and
a server communication interface configured to transmit the page images and the product information to the terminal;
the terminal comprising:
a terminal communication interface configured to acquire the page images and the product information transmitted by the server;
a terminal storage configured to store the acquired page images and the acquired product information;
an imaging unit configured to capture an image of a publication;
a terminal controller configured to determine a page image corresponding to the captured image by comparing the captured image with the page images stored in the terminal storage; and
a display configured to display product information associated with the determined page image.

9. The information processing system of claim 8, wherein
the terminal communication interface is configured to transmit, to the server, information related to determination processing executed by the terminal controller to determine the page image,
the server communication interface is configured to acquire the information related to determination processing transmitted by the terminal, and
the server storage is configured to store the acquired information related to determination processing.

10. The information processing system of claim 8, wherein
in response to a user selecting a product from among products displayed as the product information, the display is configured to display detailed product information of the selected product,
the terminal communication interface is configured to transmit, to the server, information related to display processing for displaying the detailed product information on the display,
the server communication interface is configured to acquire the information related to display processing transmitted by the terminal, and
the server storage is configured to store the acquired information related to display processing.

11. The information processing system of claim 8, wherein
in response to a user selecting a product from among products displayed as the product information, the terminal storage is configured to store the selected product in a selection list,
the terminal communication interface is configured to transmit, to the server, information related to storage processing to store the selected product in the storage,
the server communication interface is configured to acquire the information related to storage processing transmitted by the terminal, and
the server storage is configured to store the acquired information related to storage processing.

12. The information processing system of any one of claims 8 to 10, wherein the server comprises a server controller configured to perform analysis on the basis of information stored by the server storage.
